Europäisches Patentamt

European Patent Office

Office européen des brevets

(19)

(11) Publication number: **0 333 729 B1**

## (12) EUROPEAN PATENT SPECIFICATION

(45) Date of publication of patent specification :
18.09.91 Bulletin 91/38

(51) Int. Cl.⁵ : **F16L 41/04**

(21) Application number : **87907538.0**

(22) Date of filing : **06.11.87**

(86) International application number :
**PCT/SE87/00522**

(87) International publication number :
**WO 88/03627 19.05.88 Gazette 88/11**

(54) A PIPE COUPLING FOR CONNECTING A BRANCH PIPE TO A FEED PIPE.

(30) Priority : **10.11.86 SE 8604810**

(43) Date of publication of application :
**27.09.89 Bulletin 89/39**

(45) Publication of the grant of the patent :
**18.09.91 Bulletin 91/38**

(84) Designated Contracting States :
**AT DE FR GB IT NL**

(56) References cited :
**FR-A- 2 129 250**
**SE-B- 418 899**
**SE-B- 425 185**

(73) Proprietor : **ROGSTADIUS, Ivan**
**Sidensvansvägen 6**
**S-125 31 Älvsjö (SE)**

(72) Inventor : **ROGSTADIUS, Ivan**
**Sidensvansvägen 6**
**S-125 31 Älvsjö (SE)**

(74) Representative : **Jacobsson, Rune et al**
**Axel Ehrners Patentbyra AB Box 10316**
**S-100 55 Stockholm (SE)**

## Description

### FIELD OF THE INVENTION

This invention relates to a pipe coupling for connecting a branch pipe to a feed pipe without the necessity of cutting down or stopping the flow in the feed pipe.

### DESCRIPTION OF THE PRIOR ART

A pipe coupling of the above mentioned kind is previously disclosed in SE-B-418899 and comprises coupling parts sealingly embracing the feed pipe, a cylindrical guide passage-way formed in the coupling parts, a cylindrical piston sealingly inserted in the guide passageway, said piston being at its inner end provided with a knife-shaped cutting-up means and formed with a passageway for flow connection between the feed pipe and the branch pipe connected to the coupling part. In the assembled position of the coupling parts a portion of the feed pipe projects in radial direction into the guide passage-way and knife-shaped means of the piston is offset to said projecting portion of the feed pipe and is arranged to cut up a hole in the feed pipe upon rotation of the piston without translatoric movement.

In the known pipe coupling the edge of the knife-shaped means is arranged to extend longidudinally relative to said piston from the point at least up to a level with the mantle surface of said feed pipe positioned furthest into the guide passage-way and the piston has an axis directed radially relative to the feed pipe in order to be able to cut up, upon said rotation, two holes positioned along the feed pipe at a distance from each other with an intermediate bridge.

The advantage of the known pipe coupling is that the flow area of the holes can be made at least as large as the cross section area of the feed pipe.

A disadvantage of the known pipe coupling is, however, that is has proved not to manage feed pipes of harder materials than copper.

### SUMMARY OF THE INVENTION

The pipe coupling according to the invention can be used both for thin-walled steel tubes and for copper tubes.

The characteristics of the invention are that the knife-shaped means has an edge positioned only in the transverse plane of said piston with an extension along substantially radial direction of the piston and that the axis of the piston is directed transversally relative to the axis of the feed tube with a displacement relative to the centre of the feed pipe.

In a preferred embodiment of the invention said edge is provided with a point positioned inwardly relative to the periphery of said piston and the axis of the piston is directed along substantially tangential direction relative to the feed pipe.

### DESCRIPTION OF THE DRAWINGS

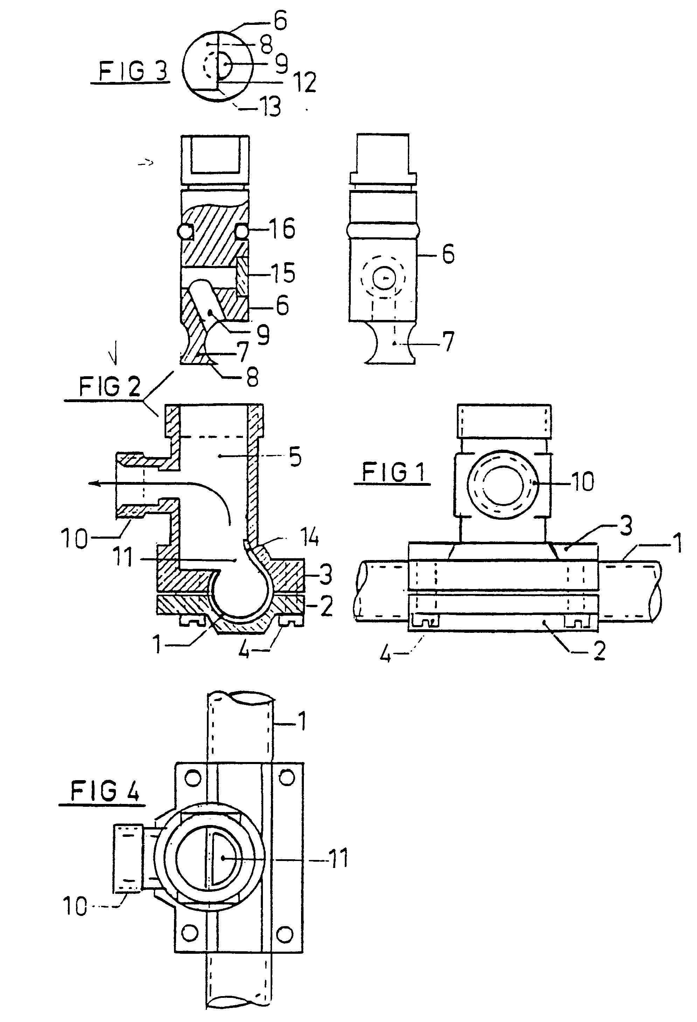

The invention is in the following described with reference to the accompanied drawings in which Fig. 1 shows a front view of a pipe coupling in a preferred embodiment connected to a feed pipe wherein in elucidating purpose a piston included in the pipe coupling is omitted, Fig. 2 is a cross section of the pipe coupling according to Fig. 1 and furthermore shows a cross section and a side view of the piston incorporated in the pipe coupling, Fig. 3 is a view from below showing a cutting means of the piston, and Fig. 4 is a view from above showing the pipe coupling.

### PREFERRED EMBODIMENT

As appears from the embodiment shown in Figs. 1-4 the pipe coupling according to the invention consists of two coupling parts 2 and 3 sealingly embracing a feed pipe 1. The coupling parts 2 and 3 are by screws 4 fixed relative each other and embrace the feed pipe 1. One of the coupling parts 3 is provided with a cylindrical guide passage-way 5 for a likewise cylindrical piston 6. The piston 6 is at its inner end 7 provided with a knife-shaped cutting means 8 and is formed with a channel 9 for flow communication between the feed pipe 1 and the connection 10 projecting from the coupling part 3 for a branch pipe (not shown).

In the assembled position of the coupling parts 2 and 3 a portion of the feed pipe projects in radial direction into the guide passage-way 5. Moreover, the cutting means 8 of the piston 6 is positioned laterally of the projecting portion of the feed pipe 1 and is upon rotation of the piston 6 without translatoric movement thereof arranged to cut up a hole 11 in the feed pipe 1.

The knife-shaped cutting means 8 has according to the invention an edge 12 positioned only in a transverse plane of the piston 6 with an extension along substantially radial direction thereof and the axis of the piston 6 is directed transversally relative to the axis of the feed pipe 1 with a displacement relative to the centre of the feed pipe.

In a preferred embodiment of the invention, the edge 12 is provided with a point 13 positioned inwardly relative to the periphery of the piston 6 and the axis of the piston is directed along substantially tangential direction relative to the feed pipe 1.

By for instance a wrench or another appropriate tool the piston 6 is arranged to be rotated one revolution clockwise for cutting up the hole 11 in the feed pipe 1. The inner end 7 of the piston 6 is in the preferred embodiment in a manner known per se through the Swedish patent No. 7910060-8 plough-shaped for up-folding a material 14 cut out from the feed pipe 1 into the guide passage-way 5. Besides the fact that cut-out material 14 accordingly does not follow a flow in the pipe coupling, nor by folding downwardly into the flow disturbs the flow, an effective fastening of the pipe coupling in its position of the feed pipe 1 is established.

After the cutting the piston 6 is used as valve body for controlling the flow through the connection 10. The piston 6 is for this purpose provided with a sealing 15 which after rotation half a revolution closes the opening between the channel 9 and the connection 10. Moreover, the piston 6 is provided with a sealing ring 16.

## Claims

1. A pipe coupling for connecting a branch pipe to a feed pipe (1), comprising first and second coupling parts (2, 3) sealingly embracing the feed pipe, a cylindrical guide passage-way (5) formed in said second coupling part, a cylindrical piston (6) sealingly inserted in the guide passage-way, which piston at its inner end (7) is provided with a knife-shaped cutting means (8) and is formed with a channel (9) for flow communication between the feed pipe and a branch pipe connection (10) in said second coupling part, wherein in the assembled position for the coupling parts a portion of the feed pipe projects in radial direction into the guide passage-way and the knife-shaped cutting means of the piston is positioned laterally of the projecting portion of the feed pipe and is arranged, upon rotation of the piston without a translatoric movement thereof, to cut a hole in the feed pipe, **characterized** in that the knife-shaped cutting means has an edge (12) positioned only in a transverse plane relative to the axis of the piston with an extension along substantially radial direction of the piston and that the axis of the piston is directed transversely relative to the feed pipe with a displacement relative to the axis of the feed pipe.

2. A pipe coupling according to claim 1, **characterized** in that said edge is provided with a point (13) positioned inwardly relative to the periphery of said piston and that the axis of the piston is directed along substantially tangential direction relative to the feed pipe.

## Patentansprüche

1. Rohrkopplung zum Verbinden eines Verzweigungsrohrs mit einem Zuführrohrs mit einem Zuführrohr (1), die aufweist: einen ersten und einem zweiten Kopplungsteil (2, 3) die das Zuführrohr dichtend umgreifen, einen zylindrischen Führungsdurchgang (5), der in dem zweiten Kopplungsteil ausgebildet ist, einen zylindrischen Kolben (6), der in dem Führungsdurchgang dichtend eingefügt ist, wobei der Kolben an seinem inneren Ende (7) mit einer messerförmigen Schneideeinrichtung (8) versehen ist und mit einem Kanal (9) für eine Flußverbindung zwischen dem Zuführrohr und einer Verzweigungsrohrverbindung (10) in dem zweiten Kopplungsteil ausgebildet ist, wobei in der zusammengebauten Position für die Kopplungsteile ein Abschnitt des Zuführrohrs in radialer Richtung in den Führungsdurchgang vorsteht und die messerförmige Schneideeinrichtung des Kolbens lateral zu dem vorstehenden Abschnitt des Zuführrohrs positioniert ist und angeordnet ist, beim Drehen des Kolbens ohne eine translatorische Bewegung davon, um ein Loch in das Zuführrohr zu schneiden, **dadurch gekennzeichnet,** daß die messerförmige Schneideeinrichtung eine Kante (12) aufweist, die nur in einer transversalen Ebene positioniert ist, relativ zu der Achse des Kolbens, mit einer Ausdehnung entlang einer im wesentlichen radialen Richtung des Kolbens, und daß die Achse des Kolbens transversal ausgerichtet ist, relativ zu dem Zuführrohr, mit einem Versatz relativ zu der Achse des Zuführrohrs.

2. Rohrkopplung nach Anspruch 1, dadurch gekennzeichnet, daß die Kante mit einem Punkt (13) versehen ist, der innen positioniert ist, relativ zu dem Umfang des Kolbens, und daß die Achse des Kolbens entlang einer im wesentlichen tangentialen Richtung ausgerichtet ist, relativ zu dem Zuführrohr.

## Revendications

1. Raccord pour connecter un piquage sur une conduite d'alimentation (1), comprenant des première et seconde parties de raccord (2, 3) entourant de manière étanche la conduite d'alimentation, un passage cylindrique de guidage (5) formée dans ladite seconde partie de raccord, un piston cylindrique (6) disposé de manière étanche dans le passage de guidage, lequel piston comporte à son extrémité intérieure (7) un dispositif de coupe (8) à tranchant et un canal (9) établissant la communication du débit entre la conduite d'alimentation et un raccord de piquage (10) dans ladite seconde partie, une partie de la conduite d'alimentation faisant, dans la position d'assemblage des parties de raccord, radialement saillie dans le passage de guidage et le dispositif de coupe à tranchant du piston étant disposé latéralement par rapport à la partie en saillie de la conduite d'alimentation et de manière à découper un trou dans la conduite d'alimentation, lors d'une rotation sans translation du piston, caractérisé en ce que le fil (12) du tranchant du dispositif de coupe est disposé seulement dans un plan transversal par rapport à l'axe du piston et s'étend dans une direction sensiblement radiale du piston et en ce que l'axe de piston est dirigé transversalement par rapport à la conduite d'alimentation et est décalé par rapport à l'axe de la conduite d'alimentation.

2. Raccord selon la revendication 1, caractérisé en ce que ledit fil du tranchant comporte une pointe (13) disposée intérieurement par rapport au périmètre du piston et en ce que l'axe du piston est orienté selon une direction sensiblement tangentielle par rapport à la conduite d'alimentation.

FIG 3

6
8
9
12
13

16

15

6

9

7

8

6

7

FIG 2

5

10

11

14

3

2

1

4

FIG 1

10

3

1

4

2

1

FIG 4

11

10